(19)

Europäisches
Patentamt
European
Patent Office
Office européen
des brevets

(11) **EP 1 830 308 A2**

(12) **EUROPEAN PATENT APPLICATION**

(43) Date of publication:
**05.09.2007 Bulletin 2007/36**

(51) Int Cl.:
*G06K 9/62* (2006.01)

(21) Application number: **07250777.5**

(22) Date of filing: **23.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **02.03.2006 JP 2006056995**

(71) Applicant: **Kabushi Kaisha Toshiba**
**Tokyo 105-8001 (JP)**

(72) Inventors:
• **Kawahara, Tomokazu,**
**c/o Toshiba Corp.**
**Tokyo (JP)**

• **Yamaguchi, Osamu,**
**c/o Toshiba Corp.**
**Tokyo (JP)**
• **Maeda, Ken-ichi,**
**c/o Toshiba Corp.**
**Tokyo (JP)**

(74) Representative: **Granleese, Rhian Jane**
**Marks & Clerk**
**90 Long Acre**
**London WC2E 9RA (GB)**

(54) **Pattern recognition apparatus and method therefor**

(57)    A pattern recognition apparatus includes an image inputting unit, a face-area extracting unit, a face-characteristic-point detecting unit, a normalized-image generating unit, a subspace generating unit, a similarity calculating unit, a reference-subspace storing unit, a judging unit, and a display unit. The pattern recognition apparatus calculates an input subspace from an input pattern, calculates a reference subspace from a reference pattern, and sets, with respect to orthogonal bases $\Phi1, ..., \Phi M$ of the input subspace and orthogonal bases $\Psi1,..., \Psi N$ of the reference subspace, an average of distances between $\Phi i$ and $\Psi j$ ($i=1, ..., M$ and $j=1, ... , N$) as a similarity, and performs identification using this similarity.

FIG. 1

EP 1 830 308 A2

**Description**

CROSS-REFERENCES TO RELATED APPLICATIONS

This application is based upon and claims the benefit of priority from the prior Japanese Patent Application No. 2006-56995, file on May 2, 2006; the entire contents of which are incorporated herein by reference.

TECHNICAL FIELD

The present invention relates to a pattern recognition apparatus that performs pattern recognition at high accuracy and high speed and a method therefor.

BACKGROUND OF THE INVENTION

In the field of pattern recognition such as character recognition and face recognition, the mutual subspace method (see, for example, Japanese Application Kokai No. H11-265452 and Ken-ichi Maeda and Sadakazu Watanabe, "Pattern Matching Method with a Local Structure", the Institute of Electronics, Information and Communication Engineers Transaction (D), vol. J68-D, No. 3, pp. 345-352, 1985), the constrained mutual subspace method (see, for example, Japanese Patent Application (Kokai) No. 2000-30065 and Kazuhiro Fukui, Osamu Yamaguchi, Kaoru Suzuki, and Ken-ichi Maeda, "Face Recognition under Variable Lighting Condition with Constrained Mutual Subspace Method", the Institute of Electronics, Information and Communication Engineers Transaction D-II, vol. J82-D-II, No. 4, pp. 613-620, 1999), and the orthogonal mutual subspace method (see, for example, Tomokazu Kawahara, Masashi Nishiyama, and Osamu Yamaguchi, "Face Recognition by the Orthogonal Mutual Subspace Method", Study Report of the Information Processing Society of Japan, 2005-CVIM-151, Vol. 2005, No. 112, pp. 17-24 (2005), hereinafter referred to as Non-Patent Document 3) are used.

In performing recognition using these methods, subspaces in feature spaces are generated from an input pattern and a reference pattern, respectively, and a square of a cosine (=$\cos^2\theta1$) of an angle $\theta1$ between an input subspace generated and a reference subspace generated is set as a similarity.

A method of calculating this similarity $\cos^2\theta1$ is as follows. When orthogonal bases of the input subspace and the reference subspace are $\Phi1, ..., \Phi M$ and $\Psi1, ..., \Psi N$, an MxM matrix X=(xij) having xij of Equation (1) as a component is calculated as follows.

$$x_{ij} = \sum_{k=1}^{N}(\phi_i,\psi_k)(\phi_j,\psi_k) \qquad (1)$$

here i=1, ..., M, j=1, ..., N.

When a eigen value of X is $\lambda_1, ..., \lambda M$ ($\lambda1>=...>=\lambda M$), a similarity calculated as the maximum eigen value $\lambda1$ is as indicated by Equation (2).

$$\lambda1 = \cos^2\theta1 \quad (2)$$

For $\lambda2, ..., \lambda M$, when vectors defining the angle $\theta1$ between the input subspace and the reference subspace are u1 and v1 and an angle between an orthogonal complement of u1 in the input subspace and an orthogonal complement of v1 in the reference subspace is $\theta2$, a maximum eigen value $\lambda2$ is as indicated by Equation (3).

$$\lambda2 = \cos^2\theta2 \quad (3)$$

Subsequently, $\theta i$ is defined in the same manner. Then, since $\cos^2\theta i$ corresponds to eigen values of a matrix X, Japanese Patent Kokai No. 2000-30065 proposes that an average of the eigen values of X is used as a similarity.

These M angles θ1, ..., θM are known as "canonical angles" formed by the input subspace and the reference subspace. The canonical angle is described in detail in Non-Patent Document 4 (F. Chatelin, "Eigen value of a Matrix", translated by Masao Iri and Yumi Iri, Springer-Verlag Tokyo, 1993) and the like.

All documents referred to in this specification are described below.

As described above, in the conventional methods, calculation of a similarity between the input subspace and the reference subspace is frequently performed. Every time processing for the similarity calculation is performed, it is necessary to apply generally time-consuming calculation of a eigen value to a matrix generated from an orthogonal basis of the input subspace and the reference subspace as described in, for example, a Non-Patent Document (William H. Press, Saul A. Teukolsky, William T. Vetterling, and Brian P. Flannery, "NUMERICAL RECIPES in C", translated by Katsuichi Tankei, Haruhiko Okumura, Toshio Sato, and Makoto Kobayashi, Gijutsu-Hyohron Co., Ltd.) Therefore, recognition takes an extremely long time.

In view of the problem, it is an object of the present invention to provide a pattern recognition apparatus that does not perform eigen value calculation and can reduce a recognition time and a method therefor.

BRIEF SUMMARY OF THE INVENTION

According to embodiments of the present invention, there is provided an apparatus for pattern recognition comprising:

a pattern inputting unit configured to input an input pattern of a recognition object;
an input-subspace generating unit configured to generate an input subspace from the input pattern;
a reference-subspace storing unit configured to store a reference subspace generated from a reference pattern concerning the recognition object;
a similarity calculating unit configured to calculate a similarity between the input pattern and the reference pattern using the input subspace and the reference subspace; and
an identifying unit configured to identify the recognition object on the basis of the similarity,

wherein the similarity calculating unit includes:

orthogonal bases calculating unit configured to calculate orthogonal bases $\Phi i$ (i=1, ..., M) of the input subspace and orthogonal bases $\Psi j$ (j =1,...., N) of the reference subspace; and
distance calculating unit configured to calculate distances between all the orthogonal bases $\Phi i$ and all the orthogonal bases $\Psi j$, respectively, and

the identifying unit uses an average of the distances as the similarity.

According to the embodiments of the present invention, since eigen value calculation is not performed in the calculation of a similarity between the input subspace and the reference subspace without deteriorating identification performance, it is possible to reduce a recognition time.

BRIEF DESCRIPTION OF THE DRAWINGS

Fig. 1 is a block diagram of a face recognition apparatus showing an embodiment of the present invention;
Fig. 2 is a flowchart showing processing contents of the face recognition apparatus in Fig. 1; and
Fig. 3 is an explanatory diagram of an input image.

DETAILED DESCRIPTION OF THE INVENTION

A face-image recognition apparatus 10, which is a type of a pattern recognition apparatus according to an embodiment of the present invention, will be hereinafter explained. The present invention is applicable to recognition of various patterns such as an image. However, to make the explanation more specific, identification of an individual is performed using a face image pattern in the following explanation.

(1) Structure of the face-image recognition apparatus 10

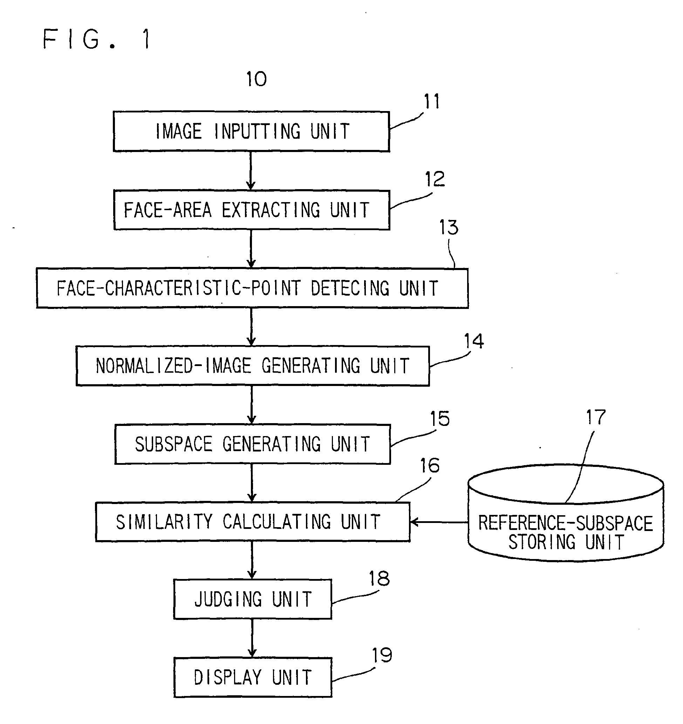

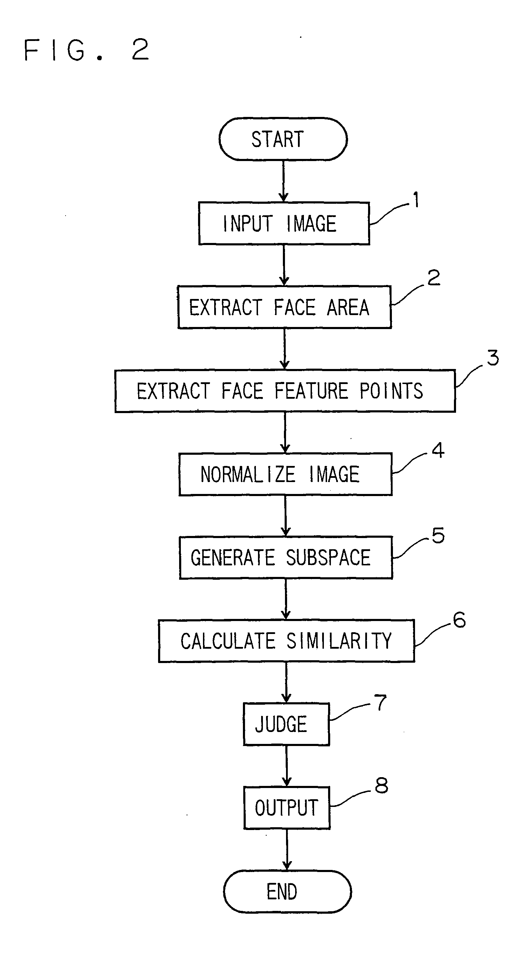

A structure of the face-image recognition apparatus 10 according to this embodiment will be hereinafter explained with reference to Figs. 1 and 2. Fig. 1 is a block diagram schematically showing the face-image recognition apparatus 10.

The face-image recognition apparatus 10 includes an image inputting unit 11, a face-area extracting unit 12, a face-characteristic-point detecting unit 13, a normalized-image generating unit 14, a subspace generating unit 15, a similarity calculating unit 16, a reference-subspace storing unit 17 in which a reference subspace is stored in advance, a judging unit 18, and a display unit 19.

It is possible to realize a function of the face-image recognition apparatus 10 by connecting a CMOS camera to a personal computer. In this case, programs for realizing respective functions of the face-area extracting unit 12, the face-characteristic-point detecting unit 13, the normalized-image generating unit 14, the subspace generating unit 15, the similarity calculating unit 16, and the judging unit 18 only have to be stored in a recording medium such as an FD, a CD-ROM, or a DVD in advance and, then, stored in the personal computer.

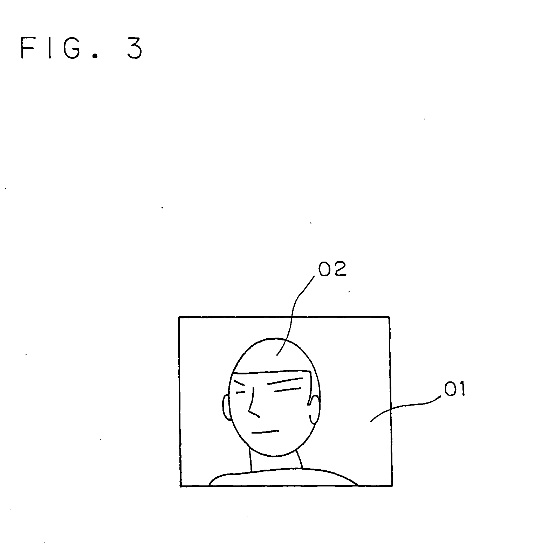

Processing in the respective units 11 to 19 will be hereinafter explained with reference to a flowchart in Fig. 2 and an input image in Fig. 3.

(2) Image inputting unit 11

The image inputting unit 11 is, for example, a CMOS camera. As shown in step 1, the image inputting unit 11 inputs an image of a person to be recognized. An image 01 shown in Fig. 3 inputted from the image inputting unit 11 is digitized by an A/D converter and sent to the face-area extracting unit 12. For example, the CMOS camera is set under a monitor.

(3) Face-area extracting unit 12

As shown in step 2, the face-area extracting unit 12 always continues to extract a face area 02 shown in Fig. 3 from the input image sent from the image inputting unit 11.

In this embodiment, correlation values are calculated while a standard face image (a template) registered in advance is moved over an entire screen. An area having a highest correlation value is set as a face area. When a correlation value is lower than a set threshold, it is considered that no face is present.

It is possible to more stably extract a face area if plural templates are used according to the subspace method, a complex similarity, or the like in order to cope with a change in a direction of a face.

(4) Face-characteristic-point extracting unit 13

As shown in step 3, the face-characteristic-point extracting unit 13 extracts feature points such as pupils, a nose, and a mouth end from the face area extracted. A method obtained by combining shape information and pattern information (see Japanese Application Kokai No. H9-251524) is applicable.

A basic idea of this method is to calculate candidates of feature points according to shape information having high positional accuracy and verify the candidates according to pattern matching. High positional accuracy can be expected in this method because positioning is performed according to the shape information. Since matching that uses a multi-template is applied to selection of a correct feature point from a group of candidates, this method is robust against variation in shapes and luminances of feature points. Concerning processing speed, since the pattern matching is applied to only candidates narrowed down by a separation filter with low calculation cost, a significant reduction in an amount of calculation can be realized compared with the method of applying the pattern matching to all the candidates.

Besides, the method based on edge information (see Shizuo Sakamoto, Yoko Miyao, and Joji Tajima, "Extraction of feature points of Eyes from a Face Image", the Institute of Electronics, Information and Communication Engineers Transaction D-II, vol. J76-D-II, No. 8, pp. 1796-1804, August, 1993), the Eigen feature method to which the Eigenspace method is applied (see Alex Pentland, Rahark Moghaddam, and ThadStarner, "View-based and modular eigenspaces for face recognition", CVPR '94, PP. 84-91, 1994), and the method based on color information (see Tsutomu Sasaki, Shigeru Akamatsu, and Yasuhito Suematsu, "Face Aligning Method using Color Information for Face Recognition", IE91-2, pp. 9-15, 1991) are applicable.

(5) Normalized-image generating unit 14

As shown in step 4, the normalized-image generating unit 14 applies normalization to an image with the feature points as references. For example, the normalization processing with pupils and nostrils set as references described in a Non-Patent Document 9 ( Osamu Yamaguchi, Kazuhiro Fukui, and Ken-ichi Maeda, "Face Recognition System using Temporal Images Sequence", the Institute of Electronics, Information and Communication Engineers Transaction, PRMU97-50, pp. 17-24, 1997) may be applied. In this case, directions of a vector connecting both the pupils and a vector connecting a midpoint of the nostrils and a midpoint of the pupils are converted into a horizontal direction and a vertical direction, respectively, and affine transformation is applied to lengths of the vectors to fix the lengths.

(6) Subspace generating unit 15

As shown in step 5, the subspace generating unit 15 generates an input subspace.

First, the subspace generating unit 15 applies histogram equalization and vector length normalization to normalized images generated by the normalized-image generating unit 14 one after another and, then, stores the normalized images in a memory.

When the normalized images are stored by a number defined in advance, the subspace generating unit 15 starts generation of an input subspace.

In order to generate subspaces one after another, the simultaneous iteration method (see Erkki Oja, translated by Hidemitsu Ogawa and Makoto Sato, "Pattern Recognition and Subspace Method", Sangyo Tosho, 1986) is applied. Consequently, subspaces are updated every time a new normalized image is inputted. Details of processing until an input subspace is generated are described in detail in Japanese Application Kokai No. H9-251524 and the Non-Patent Document 9.

Conversion effective for identification may be applied to the input subspace generated by the method and the reference subspace stored in the reference-subspace storing unit 17. As the conversion, there are methods described below.

A first conversion method is conversion for efficiently removing information unnecessary for identification as disclosed in Japanese Application Kokai No. 2000-30065.

A second conversion method is conversion for spacing apart different classes as in Non-Patent Document 3.

The reference subspace may be subjected to these kinds of conversion and, then, stored in the reference-subspace storing unit 17.

(7) Similarity calculating unit 16

As shown in step 6, the similarity calculating unit 16 calculates a similarity between the input subspace generated by the subspace generating unit 15 and each reference subspace of a person "i" stored in the reference-subspace storing unit 17 as an average of distances of the orthogonal bases $\Phi_i$ of the input subspace and the orthogonal bases $\Psi_j$ of the reference subspace and sets this average as a similarity. Here, i=1, ..., M and j=1, ..., N.

The "distance" is defined as an actual number equal to or larger than 0 and equal to or smaller than 1 calculated from two vectors and satisfying the following two conditions. A first condition is that the two vectors coincide with each other and a distance between the two vectors is 1 only when two vectors coincide with each other. A second condition is that a distance between a vector A and a vector B coincides with a distance between the vector B and the vector A.

The distance is calculated as a square of an inner product of the vectors. Specifically, the distance is calculated according to Equation (4). Here, orthogonal bases of the input subspaces are $\Phi1, ..., \Phi M$ and orthogonal bases of the reference subspaces are $\Psi1, ..., \Psi N$.

$$\frac{1}{M}\sum_{i=1}^{M}\sum_{j=1}^{N}(\phi_i,\psi_j)^2 \qquad (4)$$

This is calculated by dividing a sum of diagonal components of the matrix X given by Equation (2) by M. Thus, when canonical angles of the input subspace and the reference subspace are $\theta1, ..., \theta M$, Equation (5) is established (see Non-Patent Document 4).

$$\frac{1}{M}\sum_{i=1}^{M}\sum_{j=1}^{N}(\phi_i,\psi_j)^2 = \frac{1}{M}\sum_{i=1}^{M}\cos^2\theta_i \qquad (5)$$

Besides, an average of values other than M may be calculated as a similarity. For example, when a smaller one of M and N is L and a larger one of M and N is L', N, M, L, L', MN, and the like may be used. Moreover, this value may be multiplied by another value. For example, this value may be multiplied by N, M, L, L', or MN.

The method of calculating a distance is not limited to the square of an inner product of orthogonal bases. There are calculation methods described below.

A first calculation method is a method of calculating a power sum of an inner product of the orthogonal bases $\Phi i$ and the orthogonal bases $\Psi j$ as indicated by Equation (6).

A second calculation method is a method of calculating cosines (cos) of arctangents (arctan) of powers of absolute values of differences between the orthogonal bases $\Phi i$ and the orthogonal bases $\Psi j$ as indicated by Equation (7).

A third calculation method is a method of calculating cosines (cos) of arctangents (arctan) of powers of LP norms of the orthogonal bases $\Phi i$ and the orthogonal bases $\Psi j$ as indicated by Equation (8).

In these calculation methods, an average of values other than M may be calculated as well. Moreover, this value may be multiplied by another value.

$$\frac{1}{M}\sum_{i=1}^{M}\sum_{j=1}^{N}(\phi_i,\psi_j)^n \qquad (n=1,3,4,...) \quad (6)$$

$$\frac{1}{M}\sum_{i=1}^{M}\sum_{j=1}^{N}\cos(\arctan(|\phi_i - \psi_j|^n)) \qquad (n=1,2,3,...) \quad (7)$$

$$\frac{1}{M}\sum_{i=1}^{M}\sum_{j=1}^{N}\cos(\arctan(\|\phi_i - \psi_j\|_p^n)) \qquad (n=1,2,3,...) \quad (8)$$

This similarity is calculated for m people registered in the reference.

(8) Judging unit 18

As shown in step 7, when a similarity is the highest among the m people and a value of the similarity is larger than a threshold set in advance, the judging unit 18 identifies a person corresponding to the similarity as the person to be recognized himself/herself.

In this case, the person may be determined taking into account similarities of second and subsequent candidates. For example, when a difference of the similarities between the person and the second candidate is larger than the threshold, it is possible to make the identification indefinite.

(9) Display unit 19

As shown in step 8, the display unit 19 such as a CRT or a speaker displays a result of the identification on a screen or informs a user of the result with sound.

Concerning recognition performance of the pattern recognition apparatus 10 according to this embodiment, a result of a recognition experiment performed using face images is described below.

(10) Recognition experiment result

A recognition experiment was performed using moving images to indicate that, as the recognition performance, the conventional similarity and the similarity proposed this time show equivalent performance.

In the experiment, an error rate was calculated using face images of 25 people. The error rate is a rate of similarities of others higher than a similarity of the person himself/herself. Details of specifications of the experiment are the same as those in the orthogonal mutual subspace method of the "experiment 1" described in the Non-Patent Document 3. A result of the experiment is described below.

| | |
|---|---|
| Conventional method | 1.06% |
| This embodiment | 1.63% |

Comparative example of the conventional method 4.33°s, 4.49%

As described above, whereas the error rate was 1.06% when a maximum eigen value of MxM matrix X=(xij) having xij of Equation (1), which was the conventional similarity, was set as a similarity, the error rate was 1.63% when a distance was set as a square of an inner product of vectors in the similarity proposed this time.

The result of this embodiment is a value sufficiently low compared with the error rates of the other conventional methods (4.33% and 4.49%) described in the Non-Patent Document 3 for the purpose of comparison. It has been found that this embodiment has recognition performance equivalent to the method that uses the conventional similarity (the method that uses the orthogonal mutual subspace method) and it is possible to reduce a calculation time.

(11) Modifications

The present invention is not limited to the embodiments described above. It is possible to change the present invention in various ways without departing the spirit thereof.

For example, when identification of an individual is performed using the face image pattern, the present invention is also applicable to any kind of pattern information such as a character pattern and a voice pattern.

**Claims**

1. An apparatus for pattern recognition comprising:

   a pattern inputting unit configured to input an input pattern of a recognition object;
   an input-subspace generating unit configured to generate an input subspace from the input pattern;
   a reference-subspace storing unit configured to store a reference subspace generated from a reference pattern concerning the recognition object;
   a similarity calculating unit configured to calculate a similarity between the input pattern and the reference pattern using the input subspace and the reference subspace; and
   an identifying unit configured to identify the recognition object on the basis of the similarity,

   wherein the similarity calculating unit includes:

   orthogonal bases calculating unit configured to calculate orthogonal bases $\Phi_i$ (i=1, ..., M) of the input subspace and orthogonal bases $\Psi_j$ (j=1, ..., N) of the reference subspace; and
   distance calculating unit configured to calculate distances between all the orthogonal bases $\Phi_i$ and all the orthogonal bases $\Psi_j$, respectively, and

   the identifying unit uses an average of the distances as the similarity.

2. An apparatus according to claim 1, wherein the distance is a value of a square of an inner product of the orthogonal bases $\Phi_i$ and the orthogonal bases $\Psi_j$.

3. An apparatus according to claim 1, wherein the distance is a value of a power sum of an inner product of the orthogonal bases $\Phi_i$ and the orthogonal bases $\Psi_j$.

4. An apparatus according to claim 1, wherein the distance is a value of a sum of cosines of arctangents of powers of absolute values of differences between the orthogonal bases $\Phi_i$ and the orthogonal bases $\Psi_j$.

5. An apparatus according to claim 1, wherein the distance is a value of a sum of cosines of arctangents of powers of norms of the orthogonal bases $\Phi_i$ and the orthogonal bases $\Psi_j$.

6. An apparatus according to any preceding claim, wherein the recognition object is a face, a character, or voice.

7. An apparatus according to claim 1, wherein
the distance is an actual number equal to or larger than 0 and equal to or smaller than 1 calculated from the orthogonal bases $\Phi_i$ and the orthogonal bases $\Psi_j$,
the distance is 1 when the orthogonal bases $\Phi_i$ and the orthogonal bases $\Psi_j$ coincide with each other, and
a distance between the orthogonal bases $\Phi_i$ and the orthogonal bases $\Psi_j$ coincides with a distance between the orthogonal bases $\Psi_j$ and the orthogonal bases $\Phi_i$.

8. A method for pattern recognition comprising:

> a step of inputting an input pattern of a recognition object;
> a step of generating an input subspace from the input pattern;
> a step of storing a reference subspace generated from a reference pattern concerning the recognition object;
> a step of calculating a similarity between the input pattern and the reference pattern using the input subspace and the reference subspace; and
> a step of identifying the recognition object from the similarity,

> wherein the step of calculating the similarity includes:

> a step of calculating orthogonal bases $\Phi(i=1, ..., M)$ of the input subspace and orthogonal bases $\Psi_j$ $(j=1, ..., N)$ of the reference subspace; and
> a step of calculating distances between all the orthogonal bases $\Phi_i$ and all the orthogonal bases $\Psi_j$, respectively, and

> in the identifying step, an average of the distances is used as the similarity.

9. A computer-readable recording medium having recorded therein a program for causing a computer to execute processing for pattern recognition, the program comprising:

> a step of inputting an input pattern of a recognition object;
> a step of generating an input subspace from the input pattern;
> a step of storing a reference subspace generated from a reference pattern concerning the recognition object;
> a step of calculating a similarity between the input pattern and the reference pattern using the input subspace and the reference subspace; and
> a step of identifying the recognition object from the similarity, wherein
> the step of calculating the similarity includes:

> > a step of calculating orthogonal bases $\Phi$ $(i=1, ..., M)$ of the input subspace and orthogonal bases $\Psi(j=1, ..., N)$ of the reference subspace; and
> > a step of calculating distances between all the orthogonal bases $\Phi_i$ and all the orthogonal bases $\Psi_j$, respectively, and

> > in the identifying step, an average of the distances is used as the similarity.

F I G . 1

10

```
         ┌─────────────────────────────┐ 11
         │    IMAGE INPUTTING UNIT      │
         └─────────────────────────────┘
                      │
                      ▼
         ┌─────────────────────────────┐ 12
         │   FACE-AREA EXTRACTING UNIT  │
         └─────────────────────────────┘
                      │
                      ▼                   13
    ┌──────────────────────────────────────┐
    │ FACE-CHARACTERISTIC-POINT DETECING UNIT │
    └──────────────────────────────────────┘
                      │
                      ▼                   14
    ┌──────────────────────────────────────┐
    │   NORMALIZED-IMAGE GENERATING UNIT    │
    └──────────────────────────────────────┘
                      │
                      ▼                   15
         ┌─────────────────────────────┐
         │   SUBSPACE GENERATING UNIT   │
         └─────────────────────────────┘
                      │
                      ▼              16
    ┌────────────────────────────────┐        ┌──────────────────────┐ 17
    │  SIMILARITY CALCULATING UNIT   │◄────────│  REFERENCE-SUBSPACE   │
    └────────────────────────────────┘        │     STORING UNIT      │
                      │                        └──────────────────────┘
                      ▼
         ┌─────────────────────────┐ 18
         │      JUDGING UNIT        │
         └─────────────────────────┘
                      │
                      ▼
         ┌─────────────────────────┐ 19
         │      DISPLAY UNIT        │
         └─────────────────────────┘
```

# FIG. 2

```
            START

      INPUT IMAGE              1

    EXTRACT FACE AREA          2

 EXTRACT FACE FEATURE POINTS   3

    NORMALIZE IMAGE            4

   GENERATE SUBSPACE           5

  CALCULATE SIMILARITY         6

        JUDGE                  7

       OUTPUT                  8

            END
```

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006056995 A
- JP H11265452 A
- JP 2000030065 A
- JP H9251524 A

### Non-patent literature cited in the description

- **KEN-ICHI MAEDA ; SADAKAZU WATANABE.** Pattern Matching Method with a Local Structure. *Institute of Electronics, Information and Communication Engineers Transaction (D,* 1985, vol. J68-D (3), 345-352
- **KAZUHIRO FUKUI ; OSAMU YAMAGUCHI ; KAORU SUZUKI ; KEN-ICHI MAEDA.** Face Recognition under Variable Lighting Condition with Constrained Mutual Subspace Method. *Institute of Electronics, Information and Communication Engineers Transaction D-II,* 1999, vol. J82-D-II (4), 613-620
- **TOMOKAZU KAWAHARA ; MASASHI NISHIYAMA ; OSAMU YAMAGUCHI.** Face Recognition by the Orthogonal Mutual Subspace Method. *Study Report of the Information Processing Society of Japan, 2005-CVIM-151,* 2005, vol. 2005 (112), 17-24
- **F. CHATELIN.** Eigen value of a Matrix. Springer-Verlag, 1993
- **WILLIAM H. PRESS ; SAUL A. TEUKOLSKY ; WILLIAM T. VETTERLING ; BRIAN P. FLANNERY.** NUMERICAL RECIPES in C. Gijutsu-Hyohron Co., Ltd,
- **SHIZUO SAKAMOTO ; YOKO MIYAO ; JOJI TAJIMA.** Extraction of feature points of Eyes from a Face Image. *Institute of Electronics, Information and Communication Engineers Transaction D-II,* August 1993, vol. J76-D-II (8), 1796-1804
- **ALEX PENTLAND ; RAHARK MOGHADDAM ; THADSTARNER.** View-based and modular eigenspaces for face recognition. *CVPR '94,* 1994, 84-91
- **TSUTOMU SASAKI ; SHIGERU AKAMATSU ; YASUHITO SUEMATSU.** Face Aligning Method using Color Information for Face Recognition. *IE91-2,* 1991, 9-15
- **OSAMU YAMAGUCHI ; KAZUHIRO FUKUI ; KEN-ICHI MAEDA.** Face Recognition System using Temporal Images Sequence. *Institute of Electronics, Information and Communication Engineers Transaction, PRMU97-50,* 1997, 17-24
- **ERKKI OJA.** *Pattern Recognition and Subspace Method,* 1986